Europäisches Patentamt

European Patent Office

Office européen des brevets

(11) Numéro de publication : **0 541 458 B1**

# FASCICULE DE BREVET EUROPEEN

(45) Date de publication du fascicule du brevet :
27.12.95 Bulletin 95/52

(51) Int. Cl.⁶ : **G21C 3/17**, G21C 3/20,
G21C 3/62

(21) Numéro de dépôt : **92420385.4**

(22) Date de dépôt : **28.10.92**

(54) **Agent piégeant la radioactivité de produits de fission générés dans un élément combustible nucléaire**

(30) Priorité : **31.10.91 FR 9113714**

(43) Date de publication de la demande :
**12.05.93 Bulletin 93/19**

(45) Mention de la délivrance du brevet :
**27.12.95 Bulletin 95/52**

(84) Etats contractants désignés :
**BE DE ES FR GB SE**

(56) Documents cités :
**FR-A- 2 118 920**
**FR-A- 2 142 030**
**FR-A- 2 588 847**
**US-A- 3 784 384**
**DATABASE WPIL Section Ch, Week 8843, Derwent Publications Ltd., London, GB; Class C, AN 88-302774 & JP-A-63 221 285**

(56) Documents cités :
**DATABASE WPIL Section Ch, Week 8545, Derwent Publications Ltd., London, GB; Class C, AN 85-279099 & JP-A-60 187 899**
**DATABASE WPIL Section Ch, Week 8634, Derwent Publications Ltd., London, GB; Class C, AN 81-70756D & JP-A-56 100 637**

(73) Titulaire : **URANIUM PECHINEY**
**Tour Manhattan,**
**La Défense 2,**
**6, place de l'Iris**
**F-92400 Courbevoie Cédex 21 (FR)**

(72) Inventeur : **Marsaud, Serge**
**Le Drey - Le Verdin**
**F-38500 Voiron (FR)**
Inventeur : **Morel, Bertrand**
**Villa Lambert - Le Monnair**
**F-38340 Moirans (FR)**

(74) Mandataire : **Mougeot, Jean-Claude et al**
**PECHINEY**
**28, rue de Bonnel**
**F-69433 Lyon Cedex 03 (FR)**

## Description

## DOMAINE TECHNIQUE

La présente invention concerne un agent piégeant la radioactivité de produits de fission apparaissant dans un élément combustible de réacteur nucléaire en cours de combustion, cet agent comportant un composé oxygéné stable desdits produits de fission.

Un tel piège est surtout adapté aux produits de fissions radioactifs à longue durée de vie comme Cs, Sr ... générés en cours d'irradiation dans un réacteur nucléaire.

## ETAT DE LA TECHNIQUE

Les réacteurs du type PWR, BWR, ou à neutrons rapides, utilisant des pastilles combustibles à base d'oxyde fritté $UO_2$ ou d'oxydes mixtes génèrent "in situ" des produits de fissions dont certains ne sont pas spécifiquement gazeux dans le coeur du réacteur. En fonctionnement normal, ces produits de fission solides restent généralement en place dans les pastilles, bien qu'il puisse se produire, pour certains d'entre eux, des migrations, dues aux écarts de température entre le coeur et la périphérie d'une pastille, vers l'extérieur de ladite pastille. Mais, même dans ce cas, la majeure partie d'entre eux reste confinée dans les pastilles combustibles.

Les produits de fissions apparaissent dans les pastilles sous forme élémentaire et peuvent former des composés, relativement stables à la température du coeur du réacteur (300-900°C), avec les oxydes combustibles constituant les dites pastilles.

Cependant, en cas d'accident majeur provoquant une élévation de température excessive du coeur d'un réacteur suivi d'un endommagement voire de la fusion dudit coeur, de tels composés sont insuffisamment stables et les produits de fission se voient alors libérés avec des risques importants de dissémination dans, et de contamination de, l'environnement; le risque est d'autant plus grand que ces produits de fission ont des durées de vie longues (quelques dizaines d'années). C'est le cas par exemple de Cs 137 et Sr 90.

Un dispositif permettant de piéger le césium en fonctionnement normal dans un réacteur à neutrons rapides a été proposé dans le brevet FR-A-2438319 (Westinghouse); il consiste à intercaler entre les pastilles combustibles fissiles et fertiles des capteurs de Cs formés de pastilles, de faible densité et de forme particulière, constituées de $TiO_2$ ou $Nb_2O_5$. Ces oxydes fixent Cs à la température habituelle du coeur du réacteur et la forme des pastilles permet d'éviter toute contrainte, due à un gonflement apparaissant en cours de fonctionnement normal du réacteur, sur le gainage du combustible. Dans ce dispositif, il apparaît que le césium doit atteindre les pastilles de capteurs pour être piégé et que seul le Cs ayant suffisamment migré est effectivement piégé.

En cas d'accident majeur un tel dispositif se révèlerait insuffisamment efficace pour éviter toute dissémination du Cs; en effet tout le Cs libre, non encore piégé, présent dans les pastilles combustibles, pourrait s'échapper hors du gainage et contaminer l'environnement, la vitesse de piégeage n'étant pas assez rapide. De plus la stabilite de composés comme $CsNbO_3$ ou $Cs_2Ti_2O_5$, formés lors du piégeage, semble insuffisante à très haute température (par exemple au-dessus de 1600°C).

C'est pourquoi la demanderesse a recherché un moyen de piéger les produits de fission dangereux, le plus possible dès leur apparition en cours d'irradiation, en particulier dans la masse des pastilles combustibles.

Elle a également recherché un piège suffisamment stable et efficace pour que les produits de fission ne soient pas relargués à des températures élevées (pouvant atteindre ou dépasser 1600°C ou en cas de fusion du coeur) et en tous cas plus stable que les composés se formant in situ entre l'oxyde d'uranium et les produits de fission (par exemple Cs).

Elle a également recherché un piège qui n'entraine pas une fusion ou un début de fusion prématuré des pastilles combustibles en cas d'accident majeur, autrement dit un piège qui ne joue pas un rôle de fondant vis à vis des pastilles qui conserveront ainsi une réfractarité suffisante.

## DESCRIPTION DE L'INVENTION

L'invention est un agent piégeant la radioactivité des produits de fission apparaissant dans un combustible nucléaire à base d'oxydes frittés uranifères en cours d'irradiation, stable à température élevée, comprenant un composé oxygéné stable, combinaison d'au moins deux oxydes métalliques caractérisé en ce que le composé est de plus une combinaison avec au moins un oxyde d'un isotope non radioactif du ou des produits de fission radioactifs dont on veut piéger la radioactivité.

Cet agent piégeant est en général utilisé dans la confection des éléments combustibles nucléaires, lesquels comprennent habituellement des pastilles d'oxyde fritté uranifère entourées d'une gaine métallique en forme d'aiguille ou crayon et, selon l'invention, ledit agent piégeant.

Les composés oxygénés stables de l'invention, connus en soi, de FR-A-2 142 030 par exemple, sont en général mis sous forme de poudre fine avant d'être introduits dans l'élément combustible.

Cette introduction est en général faite:
- soit en incorporant ladite poudre, ou les composants pulvérulents permettant d'obtenir ledit composé oxygéné stable, à la poudre d'oxyde combustible avant pressage sous forme de pastilles et frittage; on obtient ainsi une pastille combustible frittée contenant à la fois l'oxyde combustible et l'agent piégeant, et servant à la confection de l'élément combustible;

- soit en revêtant les pastilles d'oxydes combustibles avec cette poudre par tous moyens connus de l'homme de l'art (par exemple poteyage, projection à chaud...)

- soit en revêtant la paroi intérieure de la gaine contenant les pastilles combustibles, gaine ayant généralement la forme d'une aiguille ou crayon, par tous moyens connus de l'homme de l'art.

Par composés oxygénés stables, on entend généralement ceux qui ne sont pas ou peu décomposés à haute température, c'est-à-dire à des températures atteignant ou dépassant 1600°C ou mieux, supérieures à 2000°C, qui peuvent survenir dans un coeur de réacteur nucléaire lors d'un accident majeur, y compris en cas de fusion dudit coeur.

Ils sont en particulier plus stables que ceux qui peuvent se former entre l'oxyde d'uranium et le cesium. Ils doivent également rester inertes et non volatils lors du frittage initial de la pastille uranifère, par exemple en atmosphère réductrice.

Ils sont en général choisis parmi les combinaisons de deux au moins des oxydes métalliques suivants : $Al_2O_3$, $CeO_2$, $Nb_2O_5$, $SiO_2$, $TiO_2$, $UO_2$, $V_2O_3$, $Y_2O_3$, $ZrO_2$, et de préférence $Al_2O_3$, $Nb_2O_5$, $SiO_2$, $TiO_2$, $UO_2$, $ZrO_2$, avec l'un au moins des oxydes des isotopes non radioactifs desdits produits de fission radioactifs, par exemple $Cs_2O$ et/ou SrO.

Le composé oxygéné stable piégeant peut être additionné d'un autre composé défini stable, par exemple un oxyde, d'un autre alcalin (comme $Rb_2O$, $Na_2O$ ou $K_2O$) et/ou alcalino-terreux, ou assimilé, comme BaO, CaO, SrO, MgO pour favoriser le piégeage par effet de dilution.

L'invention est particulièrement adaptée au piégeage de Cs, mais peut être également étendue à Sr ou à d'autres produits de fissions radioactifs.

Les composés oxygénés stables sont donc des composés mixtes au moins ternaires mais aussi des composés quaternaires, c'est-à-dire contenant au moins 3 ou 4 éléments métalliques, y compris par exemple le Cs non radioactif ou des isotopes stables des produits de fission à piéger. On peut par exemple utiliser des composés d'alumino-silicates (par exemple riches en alumine), d'alumino-titanates (en particulier ceux à base de composés ayant une structure du type hollandite), d'urano-zirconates, de titano-niobates mais de préférence de silico-zirconate, -niobate, -cerate et de Cs non radioactif qui sont obtenus par tous procédés connus de l'homme de l'art, y compris par réaction directe des oxydes (des métaux et de l'isotope non radioactif) entre eux. On peut également fondre lesdits composés oxygénés stables puis les solidifier sous forme de phase vitreuse avant de les broyer en poudre très fine, puis de les introduire dans l'élément combustible.

En particulier, il est intéressant d'utiliser, comme composés définis des oxygénés stables, des silico-aluminates du type pollucite ou zéolite dont le point de fusion est supérieur à 1750°C.

Ainsi l'agent piégeant stable contenant un isotope non radioactif du produit de fission peut être la pollucite de formule approchée $CsAlSi_2O_6$ ou la zéolite contenant du Cs dénommée Cs-F. Mais Cs ayant une section de capture des neutrons relativement élevée, on peut substituer partiellement, ou ajouter, au Cs un autre composé stable alcalin (de préférence dans l'ordre Rb, Na ou K); on peut par exemple l'ajouter sous forme d'oxyde, comme cela a été dit, ou d'un composé stable de formule approchée comme $RbAlSi_2O_6$ et de structure type analcite, ou de zéolite contenant Rb et dénommée Rb-F, ces ajouts améliorant le piégeage par effet de dilution.

En ce qui concerne le piégeage de Sr, l'ajout pourrait être fait à l'aide d'oxyde alcalino-terreux de préférence dans l'ordre Ca, Ba, Mg.

Le piégeage du produit de fission radioactif a lieu au cours du fonctionnement normal du réacteur; il ne s'effectue pas par réaction chimique pour former le composé stable, celui-ci étant déjà présent dans le combustible, mais par échange isotopique entre ledit produit de fission radioactif, lors de son apparition, et son isotope non radioactif présent dans ledit composé stable. On obtient un équilibre qui conduit à fixer la majeure partie du produit de fission libre, apparu au cours d'irradiation, sans avoir à former le composé stable par réaction chimique in situ.

La réaction d'échange isotopique tend à uniformiser la distribution des différents isotopes (radioactifs ou non) d'un même produit de fission dans l'élément combustible entre les différentes formes physico-chimique sous lesquelles ils se trouvent.

On peut schématiser l'échange de la façon suivante:

$$A^* \; + \; BA \longleftarrow\text{------} \; A \; + \; BA^* \\ \text{-----}\longrightarrow$$

A* représentant un isotope radioactif d'un produit de fission

A représentant un isotope non radioactif dudit produit de fission.

B un composé oxygéné métallique complexe, donnant avec A un composé défini oxygéné stable BA permettant de piéger A* sous forme d'un même composé défini oxygéné stable BA*.

La répartition des isotopes étant équilibrée, le rapport de la quantité BA introduite initialement sur la quantité de A* apparaissant en cours d'irradiation déterminera l'efficacité du piège ; d'autre part la quantité BA introduite devra être compatible avec les caractéristiques neutroniques que doit posséder l'élément combustible.

Ainsi dans le cas d'un combustible enrichi à 3,5% en uranium, irradié à 33000 MWj/t et refroidi pendant 3 ans, la masse de césium généré de césium (Cs 134 + Cs 135 + Cs 137) est d'environ 0,3% de la masse totale d'uranium. Pour piéger environ 75% de ce césium radioactif, on devra utiliser une quantité d'agent piégeant BA telle que la quantité de A soit d'environ 0,5 % (molaire) de la quantité totale d'uranium. Mais cette quantité de césium à introduire peut être diminuée par l'addition à BA d'un autre composé alcalin (B'A'), par exemple à base de Rb ou Na, qui provoquera un effet de dilution supplémentaire.

Pour favoriser ces échanges, on peut être amené à ajouter au composé défini un mélange d'oxyde tiers qui permettrait de stabiliser les différents alcalins; ces oxydes tiers peuvent être du type des mélanges d'oxydes métalliques déjà cités.

Pour illustrer l'échange isotopique, des essais ont été réalisés avec du césium 137 comme traceur radioactif et du Cs 133 non radioactif, sous forme chlorure aisément disponible en tant que solution étalon de radioactivité.

Dans un creuset en inconel on a ajouté, dans des proportions définies, de la pollucite synthétique broyée finement à une solution contenant un mélange de 137CsCl + 133CsCl dissouts. Après une lente évaporation du solvant, on a effectué une première gammagraphie de manière à mesurer la teneur en 137Cs initiale. On a fermé alors le creuset à l'aide d'un couvercle et on a porté l'ensemble à 800°C pendant 15 jours sous atmosphère neutre. On a alors effectué un deuxième comptage pour s'assurer que l'on n'a pas perdu de césium 137 puis on a porté l'ensemble dans un creuset ouvert en alumine, sous air sec à 1300°C pour évaporer le césium non fixé (radioactif et non radioactif), la pollucite étant stable à cette température. On a ensuite effectué un dernier comptage qui a montré que la pollucite est devenue radioactive et que son césium a donc été échangé avec du césium 137 radioactif qui se trouve ainsi piégé dans un composé stable et qui ne sera pas relargué en cas d'échauffement anormal et accidentel.

## Revendications

1. Agent piégeant la radioactivité des produits de fission apparaissant dans un combustible nucléaire à base d'oxydes frittés uranifères en cours d'irradiation, stable à température élevée, comprenant un composé oxygéné stable, combinaison d'au moins deux oxydes métalliques caractérisé en ce que le composé est de plus une combinaison avec au moins un oxyde d'un isotope non radioactif du ou des produits de fission radioactifs dont on veut piéger la radioactivité.

2. Agent piégeant selon la revendication 1 caractérisé en ce que dans le composé oxygéné stable les oxydes métalliques sont choisis parmi $Al_2O_3$, $CeO_2$, $Nb_2O_5$, $SiO_2$, $TiO_2$, $UO_2$, $V_2O_3$, $Y_2O_3$, $ZrO_2$, de préférence parmi $Al_2O_3$, $Nb_2O_5$, $SiO_2$, $TiO_2$, $UO_2$, $ZrO_2$.

3. Agent piégeant selon l'une quelconque des revendications 1 à 2 caractérisé en ce que l'oxyde métallique est un silico-aluminate ou de préférence un silico-zirconate, -niobate ou -cerate.

4. Agent piégeant selon l'une quelconque des revendication 1 à 3 caractérisé en ce que le composé oxygéné stable est la pollucite ou la zéolite contenant Cs dénommée Cs-F.

5. Agent piégeant selon l'une quelconque des revendications 1 à 4 caractérisé en ce que le composé oxygéné stable contient additionnellement un composé défini stable d'un alcalin et/ou alcalino terreux (ou assimilé) autre que le produit de fission à piéger, de préférence Rb,Na,K pour le Cs et Ca, Ba, Mg pour Sr.

6. Agent piégeant de l'une quelconque des revendications 1 à 5 caractérisé en ce qu'il est inclus dans des éléments combustibles nucléaires comprenant un oxyde uranifère fritté entouré d'une gaine métallique.

7. Agent piégeant selon la revendication 6 caractérisé en ce qu'il est inclus dans l'oxyde uranifère fritté, ce dernier étant sous forme de pastilles.

8. Agent piégeant selon la revendication 6 caractérisé en ce qu'il revêt l'oxyde uranifère fritté, ce dernier étant sous sous forme de pastilles.

9. Agent piégeant selon la revendication 6 caractérisé en ce qu'il revêt intérieurement ladite gaine.

10. Agent piégeant selon la revendication 6 caractérisé en ce qu'il est inclus dans l'élément combustible par deux au moins des moyens caractéristiques des revendications 7 à 9.

## Patentansprüche

1. Mittel zum Einfangen der Radioaktivität der in einem Kernbrennstoff auf Basis uranhaltiger gesinteter Oxide im Bestrahlungsverlauf auftretenden Spaltprodukte, das bei hoher Temperatur stabil ist und eine stabile sauerstoffhaltige Verbindung aufweist,

dadurch gekennzeichnet,
daß die Verbindung weiter eine Kombination mit wenigstens einem Oxid eines nicht-radioaktiven Isotops des oder der radioaktiven Spaltprodukte ist, dessen bzw. deren Radioaktivität man einfangen will.

2. Einfangmittel nach Anspruch 1, dadurch gekennzeichnet, daß die Metalloxide in der stabilen sauerstoffhaltigen Verbindung unter $Al_2O_3$, $CeO_2$, $Nb_2O_5$, $SiO_2$, $TiO_2$, $UO_2$, $V_2O_3$, $Y_2O_3$ und $ZrO_2$, vorzugsweise unter $Al_2O_3$, $Nb_2O_5$, $SiO_2$, $TiO_2$, $UO_2$ und $ZrO_2$ gewählt werden.

3. Einfangmittel nach irgendeinem der Ansprüche 1 und 2, dadurch gekennzeichnet, daß das Metalloxid ein Silico-Aluminat oder vorzugsweise ein Silico-Zirkonat, -Niobat oder -Cerat ist.

4. Einfangmittel nach irgendeinem der Ansprüche 1 bis 3, dadurch gekennzeichnet, daß die stabile sauerstoffhaltige Verbindung Pollucit oder Cs-F genannter, Cs enthaltender Zeolith ist.

5. Einfangmittel nach irgendeinem der Ansprüche 1 bis 4, dadurch gekennzeichnet, daß die stabile sauerstoffhaltige Verbindung zusätzlich eine bestimmte stabile Verbindung eines Alkali- und/oder Erdalkali- (oder ähnlichen) Metalls, das von dem einzufangenden Spaltprodukt verschieden ist, insbesondere von Rb, Na, K für Cs und von Ca, Ba, Mg für Sr, enthält.

6. Einfangmittel nach irgendeinem der Ansprüche 1 bis 5, dadurch gekennzeichnet, daß es in Kernstoffbrennelementen eingeschlossen ist, die ein von einer Metallhülle umgebenes, uranhaltiges gesintertes Oxid aufweisen.

7. Einfangmittel nach dem Anspruch 6, dadurch gekennzeichnet, daß es im uranhaltigen gesinterten Oxid eingeschlossen ist, welch letzteres in Form von Tabletten ist.

8. Einfangmittel nach dem Anspruch 6, dadurch gekennzeichnet, daß es das uranhaltige gesinterte Oxid bedeckt, welch letzteres in Form von Tabletten ist.

9. Einfangmittel nach dem Anspruch 6, dadurch gekennzeichnet, daß es die Hülle im Inneren bedeckt.

10. Einfangmittel nach dem Anspruch 6, dadurch gekennzeichnet, daß es im Brennstoffelement durch wenigstens zwei der kennzeichnenden Maßnahmen der Ansprüche 7 bis 9 eingeschlossen ist.

**Claims**

1. An agent for trapping the radioactivity of fission products appearing in a nuclear fuel based on uraniferous sintered oxides in the course of irradiation, which is stable at high temperature, comprising a stable oxygenated compound, a combination of at least two metallic oxides, characterised in that the compound is furthermore a combination with at least one oxide of a non-radioactive isotope of the radioactive fission product(s) whose radioactivity is to be trapped.

2. A trapping agent according to Claim 1, characterised in that in the stable oxygenated compound the metallic oxides are selected from $Al_2O_3$, $CeO_2$, $Nb_2O_5$, $SiO_2$, $TiO_2$, $UO_2$, $V_2O_3$, $Y_2O_3$, $ZrO_2$, preferably from $Al_2O_3$, $Nb_2O_5$, $SiO_2$, $TiO_2$, $UO_2$, $ZrO_2$.

3. A trapping agent according to any one of Claims 1 to 2, characterised in that the metallic oxide is a silico-aluminate or preferably a silico-zirconate, -niobate, or -cerate.

4. A trapping agent according to any one of Claims 1 to 3, characterised in that the stable oxygenated compound is pollucite or zeolite containing Cs which is referred to as Cs-F.

5. A trapping agent according to any one of Claims 1 to 4, characterised in that the stable oxygenated compound additionally contains a stable defined compound of an alkali metal and/or alkaline earth metal (or assimilated) other than the fission product to be trapped, preferably Rb, Na, K for Cs and Ca, Ba and Mg for Sr.

6. A trapping agent according to any one of Claims 1 to 5, characterised in that it is included in nuclear fuel elements comprising a sintered uraniferous oxide surrounded by a metal sheath.

7. A trapping agent according to Claim 6, characterised in that it is included in the sintered uraniferous oxide. this latter being in pellet form.

8. A trapping agent according to Claim 6 characterised in that it coats the sintered uraniferous oxide, this latter being in pellet form.

9. A trapping agent according to Claim 6, characterised in that it internally coats said sheath.

10. A trapping agent according to Claim 6, characterised in that it is included in the fuel element by at least two of the characteristic means of Claims 7 to 9.